# EUROPEAN PATENT APPLICATION

(11) **EP 4 628 953 A1**
(43) Date of publication of application: **08.10.2025**
(21) Application number: 23906091.6
(22) Date of filing: 22.12.2023
(51) Int. Cl.: G02B 6/30

(54) **OPTICAL CONNECTOR AND OPTICAL COMMUNICATION SYSTEM**

(30) Priority: 23.12.2022 CN 202211666483
(71) Applicant: Huawei Technologies Co., Ltd., Shenzhen, Guangdong 518129 (CN)
(72) Inventor: HUANG, Xinhua, Shenzhen, Guangdong 518129 (CN); QIU, Xiaoming, Shenzhen, Guangdong 518129 (CN); ZHENG, Zhujun, Shenzhen, Guangdong 518129 (CN)
(74) Representative: Maiwald GmbH
(86) International application number: PCT/CN2023/140968
(87) International publication number: WO 2024/131936

(57) **Abstract**

An optical connector and an optical communication system are provided. The optical connector includes: a first lens array (20), a connection assembly (30), and an FAU (40). A through hole (31) is provided in the connection assembly (30), the first lens array (20) is disposed in the through hole (31), the FAU (40) is fastened in the through hole (31) from a first end of the connection assembly (30), and an optical axis of the FAU (40) is coaxially disposed with an optical axis of the first lens array (20). The optical connector implements accurate coupling between the PIC (10) and the FAU (40) by implementing transmission of an optical signal between the PIC (10) and the FAU (40). This ensures efficient transmission of the optical signal between the PIC (10) and the FAU (40) during sending and receiving of the optical signal.

## Description

This application claims priority to Chinese Patent Application No. 202211666483.X, filed with the China National Intellectual Property Administration on December 23, 2022 and entitled "OPTICAL CONNECTOR AND OPTICAL COMMUNICATION SYSTEM", which is incorporated herein by reference in its entirety.

### TECHNICAL FIELD

This application pertains to the field of fiber device technologies, and in particular, to an optical connector and an optical communication system.

### BACKGROUND

Optical communication usually refers to fiber communication. In a communication manner in which light is used as an information carrier, optical communication has advantages such as a high transmission speed and a long transmission distance, is widely applied to fields such as a telecommunication network field, a data communication field, and a cloud computing field, and becomes one of important communication manners. One complete optical communication link usually includes three parts: "a transmit end, a transmission medium, and a receive end". The transmit end converts an electrical signal into an optical signal, the optical signal is transmitted to the receive end through the transmission medium, and the receive end converts the optical signal into the electrical signal to complete information transmission.

To improve integration density of the optical communication link, both the transmit end and the receive end usually use a chip like a photonic integrated circuit (photonic integrated circuit, PIC), and the transmission medium uses a fiber array unit (fiber array unit, FAU). How to implement accurate coupling between the PIC and the FAU and effectively ensure efficient transmission of the optical signal becomes a problem to be resolved.

### SUMMARY

This application provides an optical connector and an optical communication system, so that accurate coupling between a transmit end and a receive end of an optical signal and a fiber can be implemented, thereby effectively ensuring efficient transmission of the optical signal.

To achieve the foregoing objective, the following technical solutions are used in this application.

According to a first aspect, this application provides an optical connector. The optical connector includes: a first lens array, a connection assembly, and an FAU. A through hole is provided in the connection assembly, the first lens array is disposed in the through hole, one end of the FAU is fastened in the through hole, and an optical axis of the FAU is coaxially disposed with an optical axis of the first lens array.

Based on the optical connector provided in this application, the optical axis of the FAU is coaxially disposed with the optical axis of the first lens array, so that an optical signal shaped by the first lens can be accurately transmitted to the FAU. When a photonic integrated circuit PIC is connected to the first lens array from the other end of the connection assembly, an optical signal sent and/or received by the PIC may be transmitted to the FAU through the first lens array, so that transmission of the optical signal between the PIC and the FAU is implemented, the PIC and the FAU are accurately interconnected, and coupling accuracy of the PIC and the FAU is improved.

In a possible design, the PIC extends into the through hole from one end of the connection assembly to be connected to the first lens array, so that the PIC and the FAU perform transmission of the optical signal.

Based on the foregoing optional manner, because both the first lens array and the FAU are inserted into the through hole of the connection assembly, the optical signal between the PIC and the FAU can be transmitted in the through hole of the connection assembly. This reduces a loss of the optical signal during transmission between the PIC and the FAU, improves optical signal utilization, improves transmission efficiency of the optical signal, and further ensures high-quality transmission of the optical signal in an optical communication link.

In a possible design, the connection assembly includes a first connector terminal and a second connector terminal, and one end of the first connector terminal is detachably connected to one end of the second connector terminal.

A first through hole is provided in the first connector terminal, a second through hole is provided in the second connector terminal, and the first through hole and the second through hole communicate to form the through hole.

The first lens array is disposed in the first through hole, and the end of the FAU is fastened in the second through hole.

For example, at least one protrusion may be provided at one end that is of the first connector terminal and that is close to the second connector terminal, at least one groove is provided at one end that is of the second connector terminal and that is close to the first connector terminal, and the protrusion is inserted into the groove, to implement the detachable connection between the first connector terminal and the second connector terminal; and/or at least one protrusion is provided at one end that is of the second connector terminal and that is close to the first connector terminal, at least one groove is provided at one end that is of the first connector terminal and that is close to the second connector terminal, and the protrusion is inserted into the groove, to implement the detachable connection between the first connector terminal and the second connector terminal.

It is not difficult to understand that the first lens array is disposed in the first through hole of the first connector terminal, the FAU is disposed in the second through hole of the second connector terminal, and the optical axis of the FAU is coaxially disposed with the optical axis of the first lens array, so that the optical signal shaped by the first lens array can be transmitted to the FAU, to implement transmission of the optical signal between the PIC and the FAU.

Based on this optional manner, pluggable connection between the PIC and the FAU can be implemented by using a detachable connection relationship between the first connector terminal and the second connector terminal. This not only can simplify accurate coupling between the PIC and the FAU during actual application, reduce coupling difficulty, and improve a packaging yield of the PIC and the FAU, but also can quickly replace the FAU based on a detachable connection manner if a damaged fiber occurs in the FAU, to improve maintainability and use reliability of the optical connector. The foregoing disposition is used, so that an overall structure of the connection assembly or the optical connector is easier to install and maintain, and is more cost-effective.

In a possible design, the first through hole includes a first hole segment, a second hole segment, and a third hole segment that sequentially communicate, a size of the first hole segment and a size of the third hole segment are both greater than a size of the second hole segment, and the first hole segment communicates with the second through hole.

The first lens array is disposed in the third hole segment, a size of the first lens array is greater than the size of the second hole segment, and the first lens array abuts against one end of the second hole segment.

Based on this optional manner, the first hole segment, the second hole segment, and the third hole segment can form step holes provided on the first connector terminal. Because the size of the first lens array is greater than the size of the second hole segment, the second hole segment can effectively clamp the first lens array, so that the first lens array is disposed in the first connector terminal in an assembly process.

In a possible design, a connecting piece is extendedly disposed at one end that is of the second connector terminal and that is close to the first connector terminal, and the connecting piece can extend into the first hole segment and is detachably connected to the first connector terminal.

Based on this optional manner, one end of the connecting piece may be disposed in the first hole segment, so that the detachable connection between the first connector terminal and the second connector terminal is implemented. In addition, because the size of the first hole segment is greater than the size of the second hole segment, positioning between the first connector terminal and the second connector terminal can be further ensured after the connecting piece is disposed in the first hole segment and the large hole segment.

In a possible design, a connecting piece is extendedly disposed at one end that is of the first connector terminal and that is close to the second connector terminal, the second through hole includes a large hole segment and a small hole segment, the FAU is fastened in the small hole segment, and the connecting piece can extend into the large hole segment and is detachably connected to the second connector terminal.

Based on an optional manner, the FAU is fastened in the small hole segment, so that the FAU can be prevented from shaking in the through hole during actual use, stable transmission of the optical signal is effectively ensured, disposition stability of the FAU is effectively improved, and a service life of the optical connector or the FAU is prolonged.

In the foregoing two manners, the detachable connection between the first connector terminal and the second connector terminal can be implemented in a manner in which one end is fastened and the other end is slidably connected, thereby enriching connection manners of the connecting piece. In addition, such a design can further simplify an assembly process between the FAU and the PIC, facilitate assembly of the optical connector, make transmission of the optical signal more compliant with actual application, and further improve practicability of the optical connector.

Optionally, along a direction of the optical axis, a sum of a length of the large hole segment and a length of the first hole segment is equal to a length of the connecting piece.

Based on the foregoing optional manner, when the connecting piece extends into the large hole segment and is detachably connected to the second connector terminal, it can be effectively ensured that a distance between the first lens array and/or the PIC and the FAU remains unchanged in a process of plugging and unplugging the first connector terminal and the second connector terminal. In addition, such disposition is used, so that an overall structure can be aligned after the first connector terminal and the second connector terminal are connected, thereby reducing assembly space of the optical connector.

In a possible design, the connection assembly further includes a cover, and the cover is configured to be detachably connected to the first connector terminal and the second connector terminal.

Based on the foregoing optional manner, the cover is detachably connected to the first connector terminal and the second connector terminal, so that a relative distance between the first connector terminal and the second connector terminal can be further remained. The detachable connection manner not only facilitates overall assembly of the optical connector in an actual application process, but also improves assembly efficiency of the optical connector. In addition, when the FAU is damaged, replacement efficiency of the FAU can be effectively improved.

In a possible design, a first avoidance step is provided on the first connector terminal, a first clamping portion is disposed on the first avoidance step, a second avoidance step is provided on the second connector terminal, and a second clamping portion is disposed on the second avoidance step. A third clamping portion configured to be clamped to the first clamping portion and a fourth clamping portion configured to be clamped to the second clamping portion are disposed on the cover. The first clamping portion is clamped to the third clamping portion, and the second clamping portion is clamped to the fourth clamping portion.

Optionally, the first clamping portion is a groove or a protrusion, and the third clamping portion clamped to the first clamping portion is a protrusion or a groove; the second clamping portion is a groove or a protrusion, and the fourth clamping portion clamped to the second clamping portion is a protrusion or a groove; and the protrusion and the groove are detachably connected.

For example, at least two protrusions are provided on the cover, at least one groove is provided on each of the first connector terminal and the second connector terminal, and the protrusion and the groove are detachably connected; and/or
at least two grooves are provided on the cover, at least one protrusion is provided on each of the first connector terminal and the second connector terminal, and the protrusion and the groove are detachably connected.

Optionally, at least one protrusion and at least one groove may alternatively be provided on one side that is of the cover and that faces the first connector terminal and the second connector terminal, and at least one groove (or at least one protrusion) is provided on one side that is of the first connector terminal and that faces the cover, or at least one protrusion (or at least one groove) is provided on one side that is of the second connector terminal and that faces the cover. The protrusion and the groove are detachably connected.

Based on the foregoing optional manner, the protrusion is inserted into the groove, so that the first connector terminal and the second connector terminal can be conveniently and efficiently fastened through the cover, to avoid relative movement between the first connector terminal and the second connector terminal. A mechanical interlocking structure is formed by designing the protrusion and the groove, thereby improving accuracy of coupling between the PIC and the FAU, and improving high-quality transmission of the optical signal in the optical communication link.

For example, the first avoidance step includes a first avoidance side surface and a first avoidance bottom surface that are connected to each other, the first avoidance side surface is connected to a top surface of the first connector terminal, the first avoidance bottom surface is connected to a side surface of the first connector terminal, and the groove and/or the protrusion are/is provided on the first avoidance bottom surface; and/or
the second avoidance step includes a second avoidance side surface and a second avoidance bottom surface that are connected to each other, the second avoidance side surface is connected to a top surface of the second connector terminal, the second avoidance bottom surface is connected to a side surface of the second connector terminal, and the protrusion and/or the groove are/is provided on the second avoidance bottom surface.

Based on the foregoing optional manner, not only manners in which the first connector terminal is fastened to the second connector terminal through the cover can be enriched, but also an overall disposition height of the optical connector can be reduced, thereby further reducing a volume of the optical connector. In addition, the foregoing disposition may further make the assembled optical connector flatter, thereby improving aesthetics of the optical connector.

In a possible design, at least N of the cover, the first connector terminal, the connecting piece, and the second connector terminal are made of a first material, 0≤N≤3, the rest is made of a second material, and the first material and the second material can be magnetically connected.

Optionally, the first material may be a ferromagnetic material, and the second material is a magnetic material.

For example, the ferromagnetic material may be iron, cobalt, nickel, or the like.

Based on this optional manner, the first connector terminal and the second connector terminal are locked by fully using a property of the material, to form a magnetic piece interlocking structure, so that the first connector terminal and the second connector terminal are more tightly connected, thereby improving assembly efficiency and use reliability of the optical connector. In addition, a design manner in which the first connector terminal is fastened to the second connector terminal is further expanded.

In a possible design, at least N of the first connector terminal, the connecting piece, and the second connector terminal are made of a first material, 0≤N≤2, the rest is made of a second material, and the first material and the second material can be magnetically connected.

Based on this optional manner, the first connector terminal and the second connector terminal can be tightly connected without additionally designing the corresponding cover, thereby effectively improving processing efficiency of the optical connector, and reducing process costs.

In a possible design, an anti-reflective coating is disposed on one surface that is of the first lens array and that is away from the FAU.

In other words, when the PIC is connected to one surface that is of the first lens array and that is away from the FAU, the anti-reflective coating may be disposed between the first lens array and the PIC.

Based on the foregoing optional manner, the optical signal sent and/or received by the PIC can be transmitted to the first lens array as much as possible, thereby avoiding a loss of the optical signal, and improving optical signal utilization.

In a possible design, the FAU includes any one of an expanded beam fiber, a few-mode fiber, and a multi-mode fiber. The fiber in the FAU not only can shape the optical signal through the first lens array, but also can implement transmission of the optical signal.

In a possible design, the optical connector further includes a second lens array connected to the FAU, the second lens array is located between the first lens array and the FAU, and the second lens array is configured to perform beam-expanding or convergence on the optical signal.

Based on the foregoing optional manner, the fiber in the FAU may be a fiber that can transmit the optical signal. Because the second lens array is fastened to the FAU, and is located between the first lens array and the FAU, an installation tolerance range can be increased in an assembly process of the optical connector, and small displacement or angle deviation that affects coupling between the PIC and the FAU can be avoided, thereby reducing transmission efficiency of the optical signal. In addition, in comparison with a case in which both the first lens array and the second lens array are disposed in the first connector terminal or the second connector terminal, in this disposition manner, flexibility of disposing the second lens array is increased, and reliable use stability of the optical connector is ensured.

In a possible design, an anti-reflective coating is disposed between the second lens array and the FAU.

In an actual design, an anti-reflective coating may be disposed on one surface that is of the second lens array and that is away from the first lens array, or an anti-reflective coating may be disposed on one end that is of the FAU and that is close to the second lens array, to avoid a loss of the optical signal, and improve optical signal utilization.

According to a second aspect, this application provides an optical communication system. The optical communication system includes at least one optical connector provided in the possible designs of the first aspect, a PCB, and a PIC corresponding to the optical connector. The PIC protrudes from the PCB, and one end that is of the PIC and that protrudes from the PCB extends into a through hole of the optical connector and is connected to the first lens array.

For example, a manner in which the PIC protrudes from the PCB includes but is not limited to opening a notch on the PCB, and the PIC is connected to the optical connector through the notch.

Optionally, at least one electrical chip may be further disposed on the PCB, the electrical chip is electrically connected to the PIC, and an electrical signal sent by the electrical chip is used to drive the PIC to send and/or receive the optical signal.

Optionally, the electrical chip is electrically connected to the PIC through the PCB.

Optionally, the electrical chip is electrically connected to the PIC through a photoelectric carrier board, and the photoelectric carrier board is electrically connected to the PCB.

For example, an electrical connection manner includes but is not limited to soldering or bonding.

### BRIEF DESCRIPTION OF DRAWINGS

FIG. 1 is a diagram of a structure of a transmit end in an optical communication system according to an embodiment of this application;
FIG. 2 is a diagram of a structure of a transmit end in another optical communication system according to an embodiment of this application;
FIG. 3 is a diagram of an overall structure of an optical connector according to an embodiment of this application;
FIG. 4 is a diagram of a cross-sectional structure of an optical connector according to an embodiment of this application;
FIG. 5 is a diagram of an exploded structure of an optical connector according to an embodiment of this application;
FIG. 6 is a diagram of a structure in which a connecting piece is extendedly disposed at one end that is of a first connector terminal and that is close to a second connector terminal according to an embodiment of this application;
FIG. 7 is a diagram of another structure in which a connecting piece is extendedly disposed at one end that is of a second connector terminal and that is close to a first connector terminal according to an embodiment of this application;
FIG. 8 is a diagram of an overall structure of an optical connector with a cover disposed according to an embodiment of this application;
FIG. 9 is a diagram of a structure in which a groove is provided on an avoidance bottom surface of an avoidance step of a first connector terminal and/or a second connector terminal according to an embodiment of this application;
FIG. 10 is a diagram of a structure in which a second lens array is disposed between a first lens array and an FAU according to an embodiment of this application;
FIG. 11 is a diagram of a structure of an optical path between a first lens array and a second lens array according to an embodiment of this application;
FIG. 12 is a diagram of a relationship between displacement and coupling efficiency between a PIC end and an FAU end according to an embodiment of this application; and
FIG. 13 is a diagram of a relationship between a tilt angle and coupling efficiency between a PIC end and an FAU end according to an embodiment of this application.

Reference numerals:
10: PIC;
20: first lens array;
30: connection assembly; 31: through hole; 32: first connector terminal; 320: first through hole; 3201: first hole segment; 3202: second hole segment; 3203: third hole segment; 3204: first avoidance step; 3204a: first avoidance side surface; 3204b: first avoidance bottom surface; 33: connecting piece; 330: third through hole; 34: second connector terminal; 340: second through hole; 3401: large hole segment; 3402: small hole segment; 3403: second avoidance step; 3403a: second avoidance side surface; 3403b: second avoidance bottom surface; 35: cover;
40: FAU;
50: second lens array.

### DESCRIPTION OF EMBODIMENTS

To make the objectives, technical solutions, and advantages of embodiments of this application clearer, the following clearly and completely describes the technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

In the descriptions of embodiments of this application, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include at least one of the features.

In the descriptions of this application, "a plurality of" means at least two, for example, two or three, unless otherwise clearly limited.

In this application, unless otherwise clearly specified and limited, terms such as "installation", "connected", "connection", and "fastened" should be understood in a broad sense, for example, may be a fixed connection, or may be a detachable connection, or integration; or may be a direct connection, or may be an indirect connection through an intermediate medium, or may be internal communication of two elements or an interaction relationship between two elements, unless otherwise clearly limited. A person of ordinary skill in the art may understand specific meanings of the foregoing terms in this application based on specific situations.

In this application, unless otherwise clearly specified and limited, when a first feature is "above" or "below" a second feature, the first feature may be in direct contact with the second feature, or the first feature may be in indirect contact with the second feature through an intermediate medium. In addition, that the first feature is "above", "over", and "beyond" the second feature may be that the first feature is right above or obliquely above the second feature or merely indicate that the first feature is horizontally higher than the second feature. That the first feature is "below", "under", or "beneath" the second feature may be that the first feature is right below or obliquely below the second feature or merely indicate that the first feature is horizontally lower than the second feature.

In the descriptions of this application, it should be understood that the terms such as "inner", "outer", "side", "upper", "bottom", "front", and "back" indicate an orientation or a location relationship only for ease of describing this application and simplifying description, but do not indicate or imply that a specified apparatus or element needs to have a specific orientation and be constructed and operated in a specific orientation. Therefore, such terms cannot be understood as a limitation on this application.

In the descriptions of this application, it should be noted that the term "and/or" describes only an association relationship for describing associated objects and indicates that three relationships may exist. For example, A and/or B may indicate the following three cases: Only A exists, both A and B exist, and only B exists.

It should be further noted that a same reference numeral in embodiments of this application represents a same component part or a same part or component. For a same part or component in embodiments of this application, only one part or component may be marked with a reference numeral as an example in the figure. It should be understood that, for another same part or component, the reference numeral is also applicable.

Optical communication usually refers to fiber communication. In a communication manner in which light is used as an information carrier, optical communication has advantages such as a high transmission speed and a long transmission distance, is widely applied to fields such as a telecommunication network field, a data communication field, and a cloud computing field, and becomes one of important communication manners. One complete optical communication link usually includes three parts: "a transmit end, a transmission medium, and a receive end". The transmit end converts an electrical signal into an optical signal, the optical signal is transmitted to the receive end through the transmission medium, and the receive end converts the optical signal into the electrical signal to complete information transmission.

To reduce power consumption in the optical communication link, improve integration density of the optical communication link, and reduce a transmission delay of the optical signal, in the conventional technology, the transmit end and the receive end in the optical communication link usually use a chip, for example, an electrical chip or a PIC, and the transmission medium uses an FAU. Because the FAU is extremely vulnerable to damage in an assembly process, and the FAU cannot withstand a high temperature during reflow soldering, the electrical chip at the transmit end or the receive end in the optical communication link usually needs to be soldered with the PIC first, and then the PIC and the FAU are coupled, to complete assembly of the PIC and the FAU. Therefore, a structure design is provided to implement accurate coupling between the PIC and the FAU. This effectively ensures efficient transmission of the optical signal becomes an important step in a process of assembling the PIC and the FAU.

To resolve the foregoing problem, this application provides an optical connector and an optical communication system. An optical axis of an FAU in the optical connector is coaxially disposed with an optical axis of a first lens array through a through hole provided in a connection assembly. The optical axis of the FAU is coaxially disposed with the optical axis of the first lens array, so that an optical signal shaped by the first lens can be accurately transmitted to the FAU. When a PIC is connected to the first lens array, the optical signal sent by the PIC may be transmitted to the FAU through the first lens array. In this way, the PIC and the FAU can be accurately interconnected through transmission of the optical signal between the PIC and the FAU, coupling accuracy of the PIC and the FAU is improved, and efficient transmission of the optical signal between the PIC and the FAU is ensured during sending and receiving of the optical signal.

The optical connector provided in embodiments of this application may be applied to the optical communication system. The optical communication system may include a transmit end, a transmission medium, and a receive end. The transmit end may include at least one electrical chip disposed on a printed circuit board (Printed Circuit Board, PCB) and at least one PIC separately electrically connected to the at least one electrical chip. The electrical chip is configured to transmit an electrical signal to control the PIC to transmit or receive an optical signal (or a light beam). The transmission medium is the optical connector provided in embodiments of this application, and is configured to receive and transmit, to the FAU, the optical signal transmitted (or received) by the PIC. The receive end may be disposed corresponding to the transmit end. The receive end may also include at least one electrical chip and at least one PIC. The electrical chip is electrically connected to the PIC. The electrical chip at the receive end is configured to transmit an electrical signal to control the PIC to receive (or transmit) the optical signal. It is not difficult to understand that, based on an actual application scenario and a specific disposition status of the PIC at the transmit end, one PIC at the transmit end or the receive end may have only a function of sending an optical signal, or may have both a function of sending an optical signal and a function of receiving an optical signal.

The transmit end or the receive end in the optical communication system may transmit light in an edge coupler (Edge Coupler, EC) manner. It should be understood that, as an implementation of optical interconnection between the PIC and a fiber in the FAU, the EC is mainly implemented by disposing a waveguide device in the PIC at an edge location of the PIC, and coupling the fiber (or the FAU) to the waveguide device.

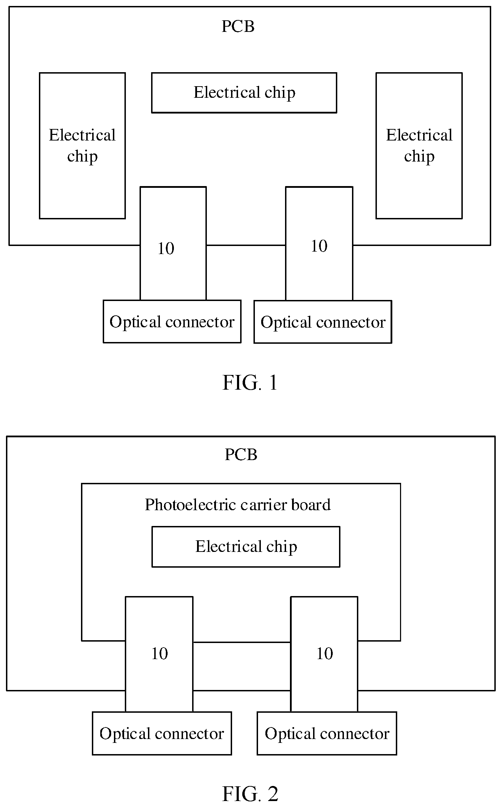

In an example, FIG. 1 is a diagram of a structure of a transmit end in an optical communication system according to an embodiment of this application. Refer to FIG. 1. The transmit end in the optical communication system includes at least one PIC and a plurality of electrical chips that are disposed on a PCB. One end of the PIC is electrically connected to at least one electrical chip through the PCB, the PIC protrudes from the PCB, and one end that is of the PIC and that protrudes from the PCB is connected to an optical connector provided in this embodiment of this application, to implement a transmission function of the optical signal between the PIC and an FAU.

In this example, the PIC and the electrical chip may be specifically fastened on the PCB in a manner such as soldering or bonding, and the PIC and the electrical chip are electrically connected through the PCB. Alternatively, the PCB may be any device or board that can integrate the electrical chip and the PIC. This is not limited in this application.

In another example, FIG. 2 is a diagram of a structure of a transmit end in another optical communication system according to an embodiment of this application. Refer to FIG. 2. One end of at least one PIC is electrically connected to at least one electrical chip through a photoelectric carrier board, the photoelectric carrier board is electrically connected to a board (for example, a PCB), and the other end that is of the PIC and that protrudes from the PCB is connected to an optical connector provided in this embodiment of this application, to implement a transmission function of an optical signal between the PIC and an FAU.

Similarly, in this example, the PIC and the electrical chip may also be fastened on the photoelectric carrier board in a manner such as soldering or bonding, and the photoelectric carrier board may also be fastened on the board in a manner such as soldering or bonding, to implement the electrical connection between the PIC and the electrical chip through the electrical connection between the photoelectric carrier board and the board.

It is not difficult to understand that the optical communication system and a manner of the electrical connection between the PIC and the electrical chip are merely examples. As the optical communication system and a specific application scenario change, the optical communication system and the manner of the electrical connection between the PIC and the electrical chip may be different. This is not specifically limited in this application.

The following describes in detail the optical connector provided in this application by using specific embodiments.

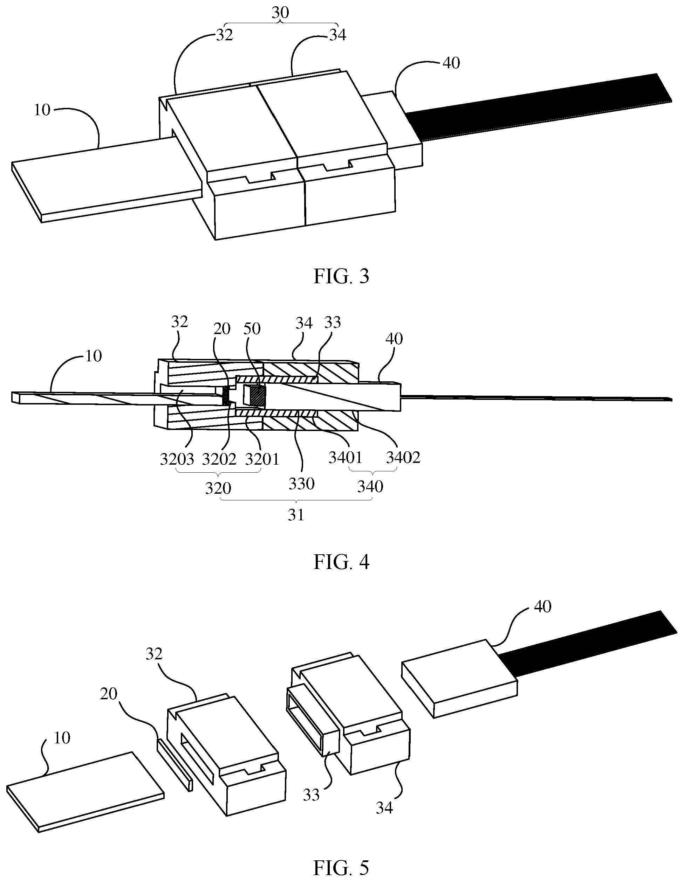

FIG. 3 is a diagram of an overall structure of an optical connector according to an embodiment of this application. FIG. 4 is a diagram of a cross-sectional structure of an optical connector according to an embodiment of this application. FIG. 5 is a diagram of an exploded structure of an optical connector according to an embodiment of this application. Refer to FIG. 3 to FIG. 5. The optical connector provided in this embodiment of this application is configured to transmit an optical signal sent and/or received by a PIC 10. The optical connector may include a first lens array 20, a connection assembly 30, and an FAU 40.

In this embodiment of this application, a through hole 31 is provided in the connection assembly 30, the first lens array 20 is disposed in the through hole 31, one end of the FAU 40 is fastened in the through hole 31, and an optical axis of the FAU 40 is coaxially disposed with an optical axis of the first lens array 20, so that an optical signal is transmitted between the PIC 10 and the FAU 40.

In an actual assembly process, devices such as an optical waveguide, a multiplexer/demultiplexer, a modulator, and a detector may be integrated on the PIC 10. One end that is of the PIC 10 and that protrudes from the PCB may extend into the through hole 31 of the connection assembly 30 in the optical connector to be connected to the first lens array 20.

It is not difficult to understand that the first lens array 20 is configured to perform beam-expanding or convergence on the optical signal. Connection between the first lens array 20 and the PIC 10 may be specifically that an end surface (or a light-emitting surface) of the PIC 10 is coupled to an incident surface of the first lens array 20. The PIC 10 may be fastened to the first lens array 20 in a manner such as adhesive bonding or soldering, so that the PIC 10 and the first lens array 20 that are coupled do not move relative to each other. For example, to avoid affecting transmission of the optical signal, an adhesive may be coated at each vertex or an edge location of the first lens array 20 to implement bonding to the PIC 10, so that the PIC 10 is fastened to the first lens array 20.

Optionally, the PIC 10 and the first lens array 20 may be fastened by using at least one material of a glass solder, a metal solder, and a high temperature adhesive.

It should be noted that, to further reduce an optical loss generated due to scattering of the optical signal on an end surface of the coupling between the PIC 10 and the first lens array 20, the end surface (namely, a cleavage surface) that is of the PIC 10 and that is close to the first lens array 20 may be ground, so that the end surface of the PIC 10 is remained flat, and the optical loss of the coupling between the PIC 10 and the first lens array 20 is reduced.

In addition, in consideration of a difference between a refractive index of the optical signal in each device of the PIC 10 and a refractive index of the optical signal in the first lens array 20, most of optical signals sent by the PIC 10 may be incident to the first lens array 20, and a small part of optical signals may be reflected on the incident surface of the first lens array 20. To reduce reflection of the optical signal, in an optional manner, an anti-reflective coating of a preset thickness may be plated on the end surface of the PIC 10 and a side surface that is of the first lens array 20 and that is close to the PIC 10, so that all optical signals sent by the PIC 10 are incident to the first lens array 20 as much as possible, thereby avoiding a loss of the optical signal, and improving optical signal utilization.

It should be understood that a disposition thickness of the anti-reflective coating may be specifically set based on the refractive index of the optical signal in each device in the PIC 10, the refractive index of the optical signal sent by the PIC 10 in the first lens array 20, a refractive index of the optical signal in an adhesive in a transmission path, and a refractive index of the optical signal in the anti-reflective coating, so that optical signal utilization can be improved, and an optical loss of the optical signal between the PIC 10 and the first lens array 20 can be reduced.

It should be understood that, in an actual design, several V-shaped grooves or circular holes may be provided on an array substrate, then a fiber is penetrated into the several V-shaped grooves or circular holes, and the fiber is fastened in the several V-shaped grooves or circular holes in a manner such as adhesive bonding, to form the FAU 40. To reduce a loss caused when the optical signal on which beam-expanding (or convergence) is performed by the first lens array 20 is incident to the FAU 40, optical grinding may be performed on an end surface that is of the FAU 40 and that is close to the first lens array 20, to remain the end surface of the FAU 40 flat.

In the foregoing embodiment, the fiber in the FAU 40 may be a fiber that meets the following condition: A mode field diameter (Mode Field Diameter, MFD) of the optical signal that is incident to the end surface of the FAU 40 matches a beam waist diameter of the optical signal that is shaped by the first lens array 20. The MFD is a corresponding spot diameter when intensity of a Gaussian spot is reduced to central intensity 1/e2. Optionally, the fiber in the FAU 40 may alternatively be a fiber that can shape a light beam refracted by the first lens array 20, so that convergence (or beam-expanding) can be performed on the shaped optical signal. For example, the fiber in the FAU 40 is an expanded beam fiber.

In an actual application scenario, one end that is of the FAU 40 and that is away from the first lens array 20 may be connected to an interface of a general-purpose fiber; or may be connected to another fiber in a soldering manner, to further implement transmission of the optical signal.

In some possible implementations, the connection assembly 30 may be formed into an integrated structure by using an integrated forming process, or may be formed by sequentially splicing (for example, connecting in a pluggable manner) a plurality of connection segments. Materials of the plurality of connection segments may be the same or may be different, provided that the plurality of connection segments do not affect transmission of the optical signal. During actual application, the plurality of connection sections may not only meet transmission of the optical signal between the PIC 10 and the FAU 40, but also reduce a transmission loss of the optical signal as much as possible.

It should be noted that a shape of the through hole 31 in the connection assembly 30 may be any shape that does not affect transmission of the optical signal between the PIC 10 and the FAU 40. For example, a shape of one end of the through hole 31 in the connection assembly 30 may be a shape that adapts to the PIC 10 and/or the first lens array 20, and a shape of the other end of the through hole 31 may be a shape corresponding to the FAU 40. Assuming that the PIC 10 and/or the first lens array 20 both are/is a cuboid, and the FAU 40 is a cylinder, a shape of one end of the through hole 31 may be set to a cuboid, and the other end of the through hole 31 may be set to a cylinder. For another example, a shape of one end of the through hole 31 in the connection assembly 30 may alternatively be another shape that can accommodate the PIC 10 and/or the first lens array 20, and a shape of the other end of the through hole 31 may alternatively be another shape that can accommodate the FAU 40.

In addition, when the fiber in the FAU 40 is a fiber that cannot perform shaping (convergence or beam-expanding) on the light beam refracted by the first lens array 20, the shape of the other end of the through hole 31 may alternatively be a shape corresponding to a shape of another lens that can shape the light beam refracted by the first lens array 20.

Because the FAU 40 is vulnerable to damage during actual application, in this embodiment of this application, the connection assembly 30 is disposed to be a structure that can implement the pluggable connection between the PIC 10 and the FAU 40, to facilitate replacement of the damaged FAU 40. Specifically, refer to FIG. 4 and FIG. 5. The connection assembly 30 may include a first connector terminal 32 and a second connector terminal 34. One end of the first connector terminal 32 is detachably connected to one end of the second connector terminal 34. A first through hole 320 is provided on the first connector terminal 32, a second through hole 340 is provided on the second connector terminal 34, and the first through hole 320 and the second through hole 340 communicate to form the through hole 31. The first lens array 20 is disposed in the first through hole 320, and the end of the FAU 40 is fastened in the second through hole 340.

A manner of implementing detachable connection between one end of the first connector terminal 32 and one end of the second connector terminal 34 includes but is not limited to the following: At least one protrusion may be provided at one end that is of the first connector terminal 32 and that is close to the second connector terminal 34, at least one groove is provided at one end that is of the second connector terminal 34 and that is close to the first connector terminal 32, and the protrusion is inserted into the groove, to implement the detachable connection between the first connector terminal 32 and the second connector terminal 34; and/or at least one protrusion is provided at one end that is of the second connector terminal 34 and that is close to the first connector terminal 32, at least one groove is provided at one end that is of the first connector terminal 32 and that is close to the second connector terminal 34, and the protrusion is inserted into the groove, to implement the detachable connection between the first connector terminal 32 and the second connector terminal 34.

Alternatively, a connecting piece 33 may be extendedly disposed at one end that is of the second connector terminal 34 and that is close to the first connector terminal 32, or a connecting piece 33 may be extendedly disposed at one end that is of the first connector terminal 32 and that is close to the second connector terminal 34, and the detachable connection between the first connector terminal 32 and the second connector terminal 34 is implemented through the connecting piece 33.

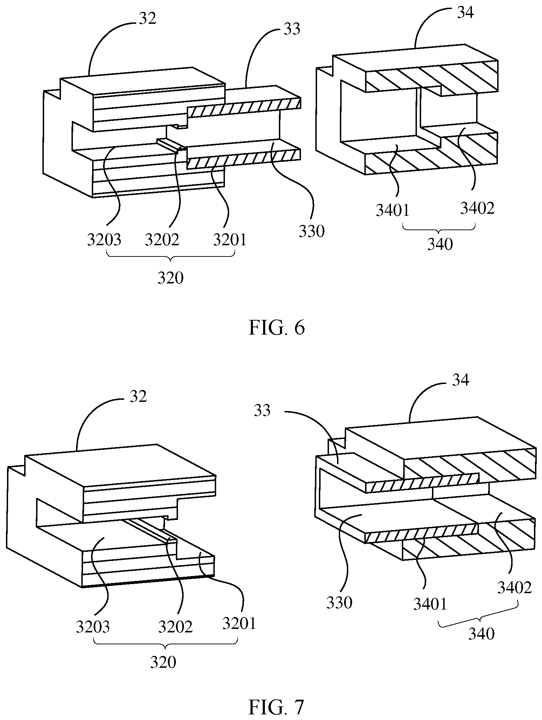

To implement accurate transmission of the optical signal between the PIC 10 and the FAU 40, and be compatible with the detachable connection between the first connector terminal 32 and the second connector terminal 34, in this embodiment of this application, as shown in FIG. 6 and FIG. 7, the first through hole 320 provided on the first connector terminal 32 may include a first hole segment 3201, a second hole segment 3202, and a third hole segment 3203 that sequentially communicate, a size of the first hole segment 3201 and a size of the third hole segment 3203 are both greater than a size of the second hole segment 3202, and the first hole segment 3201 communicates with the second through hole 340. The first lens array 20 is disposed in the third hole segment 3203, a size of the first lens array 20 is greater than the size of the second hole segment 3202, and the first lens array 20 abuts against one end of the second hole segment 3202.

It should be noted that the second hole segment 3202 may also be referred to as a light transmission hole, and is configured to pass through the optical signal. To avoid affecting transmission of the optical signal and comply with a requirement of an actual design, the size of the third hole segment 3203 is greater than the size of the second hole segment 3202, so that after the first lens array 20 is disposed in the third hole segment 3203, the optical signal can pass through the second hole segment 3202 without being blocked. In addition, in comparison with a design in which the size of the second hole segment 3202 is the same as the size of the third hole segment 3203, in such disposition, the first lens array 20 may be further clamped to the third hole segment 3203, to prevent the first lens array 20 from being damaged by the first connector terminal 32 and the second connector terminal 34 in a pluggable process.

During actual assembly, the first lens array 20 and the PIC 10 that are coupled may be disposed in the third hole segment 3203 in a manner such as bonding or soldering, and abut against one end of the second hole segment 3202. Specifically, the first lens array 20 may be mounted in the third hole segment 3203; or the PIC 10 may be mounted in the third hole segment 3203; or the first lens array 20 and the PIC 10 are separately mounted in the third hole segment 3203, to assemble the first lens array 20 and the PIC 10 that are coupled in the third hole segment 3203.

To avoid relative movement of the first lens array 20 in the third hole segment 3203, ensure stable transmission of the optical signal between the first lens array 20 and the FAU 40, and prolong a service life of the optical connector, optionally, the size of the third hole segment 3203 may adapt to the size of the first lens array 20, that is, the first lens array 20 abuts against a hole wall of the third hole segment 3203.

In addition, to avoid affecting transmission of the optical signal and prevent the first lens array 20 from being damaged by the first connector terminal 32 and the second connector terminal 34 in the pluggable process, in this embodiment of this application, the size of the first hole segment 3201 is greater than the size of the second hole segment 3202, so that the first hole segment 3201 can accommodate a part of the connecting piece 33, and the first connector terminal 32 is detachably connected to the second connector terminal 34. When one end of the connecting piece 33 is fastened to the second connector terminal 34, and the other end of the connecting piece 33 is slidably disposed on the first connector terminal 32, a sliding distance of the connecting piece 33 may also be effectively controlled by using a length of the first hole segment 3201 along a direction of the optical axis.

In a possible example, as shown in FIG. 6, a manner in which one end of the first connector terminal 32 is detachably connected to one end of the second connector terminal 34 may further include: A connecting piece 33 is extendedly disposed at one end that is of the second connector terminal 34 and that is close to the first connector terminal 32, and the connecting piece 33 can extend into the first hole segment 3201 and is detachably connected to the first connector terminal 32. Alternatively, the connecting piece 33 is extendedly disposed at one end that is of the first connector terminal 32 and that is close to the second connector terminal 34, the second through hole 340 includes a large hole segment 3401 and a small hole segment 3402, the FAU 40 is fastened in the small hole segment 3402, and the connecting piece 33 can extend into the large hole segment 3401 and is detachably connected to the second connector terminal 34.

In other words, the connecting piece 33 and the second connector terminal 34 may be formed into an integrated structure by using an integrated forming process, and the other end of the connecting piece 33 is slidably disposed in the first hole segment 3201, to implement the pluggable connection between the first connector terminal 32 and the second connector terminal 34. Alternatively, the connecting piece 33 and the first connector terminal 32 are formed into an integrated structure by using an integrated forming process, and the other end of the connecting piece 33 is slidably disposed in the large hole segment 3401, to implement the pluggable connection between the first connector terminal 32 and the second connector terminal 34.

Certainly, the connecting piece 33 may alternatively be separately disposed, to be specific, one end of the connecting piece 33 is fastened to the first hole segment 3201, and the other end of the connecting piece 33 is slidably disposed in the large hole segment 3401. For example, an outer side wall of one end of the connecting piece 33 may be in tight contact with a hole wall of the first hole segment 3201 in a manner such as soldering or adhesive bonding, to fasten the first hole segment 3201 to one end of the connecting piece 33; and the large hole segment 3401 adapted to the connecting piece 33 is designed, so that an outer side wall of the other end of the connecting piece 33 is slidably connected to a hole wall of the large hole segment 3401.

Further refer to FIG. 7. One end of the connecting piece 33 is fastened to the large hole segment 3401, and the other end of the connecting piece 33 is slidably disposed in the first hole segment 3201. For example, an outer side wall of one end of the connecting piece 33 may be in tight contact with a hole wall of the large hole segment 3401 in a manner such as soldering or adhesive bonding, so that one end of the connecting piece 33 is fastened to the large hole segment 3401; and the first hole segment 3201 adapted to the other end of the connecting piece 33 is designed, so that an outer side wall of the other end of the connecting piece 33 is slidably connected to a hole wall of the first hole segment 3201.

It is not difficult to understand that the connecting piece 33 may be set to the shape shown in FIG. 6 or FIG. 7, and the connecting piece 33 may also be an arc-shaped plate corresponding to the first hole segment 3201 and/or the large hole segment 3401 separately. One end of the arc-shaped plate is fastened in the first hole segment 3201, or one end of the arc-shaped plate is fastened in the large hole segment 3401, to implement the detachable connection or the sliding connection between the first connector terminal 32 and the second connector terminal 34.

The connecting piece 33 may further be provided with a partition plate of a preset height on an outer side wall that is of the connecting piece 33 and that is in contact with the first connector terminal 32 or the second connector terminal 34. The partition plate is configured to constrain a pluggable distance between the first connector terminal 32 and the second connector terminal 34. For example, when one end of the connecting piece 33 is fastened to the first hole segment 3201, and the other end of the connecting piece 33 is slidably disposed in the large hole segment 3401, the partition plate may be fastened to an end surface that is of the first connector terminal 32 and that is close to the second connector terminal 34; or when one end of the connecting piece 33 is fastened to the large hole segment 3401, and the other end of the connecting piece 33 is slidably disposed in the first hole segment 3201, the partition plate may be fastened to an end surface that is of the second connector terminal 34 and that is close to the first connector terminal 32. A specific disposition shape of the connecting piece 33 is not limited in this application, provided that normal transmission of the optical signal is not affected.

However, in this embodiment of this application, the connecting piece 33 may be shown in FIG. 6 or FIG. 7, and the third through hole 330 may be provided in the connecting piece 33. The size of the third through hole 330 may be different from a size of the small hole segment 3402. By way of an example but not a limitation, when the size of the third through hole 330 is greater than the size of the small hole segment 3402, an outer side wall of the FAU 40 may be connected to a hole wall of the small hole segment 3402, so that the optical axis of the FAU 40 is coaxially disposed with the optical axis of the first lens array 20 through the small hole segment 3402. When the size of the third through hole 330 is less than the size of the small hole segment 3402, it may be set that the size of the small hole segment 3402 is greater than the size of the FAU 40, the size of the third through hole 330 adapts to the size of the FAU 40, and the FAU 40 extends into the third through hole 330 from the small hole segment 3402, so that the outer side wall of the FAU 40 is connected to a hole wall of the third through hole 330, and the optical axis of the FAU 40 is coaxially disposed with the optical axis of the first lens array 20.

Certainly, to enhance stability of the FAU 40 disposed in the through hole 31, in this embodiment of this application, the size of the third through hole 330 in the connecting piece 33 may be the same as the size of the small hole segment 3402. It should be understood that when the size of the third through hole 330 is the same as the size of the small hole segment 3402, the outer side wall of the FAU 40 may be fastened to or abut against the hole wall of the small hole segment 3402 and the hole wall of the third through hole 330, so that the optical axis of the FAU 40 is coaxially disposed with the optical axis of the first lens array 20 through the small hole segment 3402, and the FAU 40 can be subject to a balanced support force in the through hole 31, thereby ensuring assembly firmness of the FAU 40.

To simplify an assembly process, when the first connector terminal 32 is detachably connected to the second connector terminal 34, a length of the connecting piece 33 (or the third through hole 330) along the direction of the optical axis may be greater than a sum of a length of the large hole segment 3401 and a length of the first hole segment 3201. However, to reduce manufacturing costs of the connecting piece 33 and further reduce a volume of the optical connector, in this embodiment of this application, the sum of the length of the large hole segment 3401 and the length of the first hole segment 3201 along the direction of the optical axis is equal to the length of the connecting piece 33 (or the third through hole 330). Such disposition can effectively ensure that a pluggable distance between the first lens array 20 and/or the PIC 10 and the FAU 40 remains unchanged in a process of plugging and unplugging the first connector terminal 32 and the second connector terminal 34. In addition, in such a disposition manner, the first connector terminal 32 and the second connector terminal 34 may also be attached to each other, to ensure that the connection assembly 30 has sufficient strength, thereby improving use reliability of the connection assembly 30. Such disposition may also play a good dust-proof role.

In addition, to reduce coupling difficulty of the optical signal at an end of the PIC 10, the third through hole 330 may be further coaxially disposed with the optical axis of either the first lens array 20 or the FAU 40 along a central axis of a length direction of the third through hole 330. In this way, in an actual assembly process, the FAU 40 can extend into the third through hole 330 in the connecting piece 33 through the small hole segment 3402, to improve accuracy of interconnection between the PIC 10 and the FAU 40.

Optionally, the size of the small hole segment 3402 may also adapt to the size of the FAU 40, so that the FAU 40 abuts against the hole wall of the small hole segment 3402. In this way, the FAU 40 can be prevented from shaking in the through hole 31 during actual use, thereby effectively ensuring stable transmission of the optical signal. When the size of the third through hole 330 in the connecting piece 33 is the same as the size of the small hole segment 3402, and the FAU 40 abuts against the hole wall of the small hole segment 3402, stable running of the optical connector or the FAU 40 for long time can be ensured. This helps prolong the service life of the optical connector or the FAU 40.

In a production process of the connection assembly 30, to effectively improve processing efficiency of the connection assembly 30 and reduce process costs of the connection assembly 30, in a possible design, at least N of the first connector terminal 32, the connecting piece 33, and the second connector terminal 34 are made of a first material, 0≤N≤2, the rest is made of a second material, and the first material and the second material can be magnetically connected.

It should be understood that the first material may be a ferromagnetic material, and the second material is a magnetic material; or the first material may be a magnetic material, and the second material is a ferromagnetic material.

For example, one or two of the first connector terminal 32, the connecting piece 33, and the second connector terminal 34 are made of a magnetic material (for example, magnet), and the rest is made of a ferromagnetic material; or one or two of the first connector terminal 32, the connecting piece 33, and the second connector terminal 34 are made of a ferromagnetic material, and the rest is made of a magnetic material; or all of the first connector terminal 32, the connecting piece 33, and the second connector terminal 34 are made of a magnetic material. It should be understood that the ferromagnetic material may be iron, cobalt, nickel, or the like.

For example, assuming that the ferromagnetic material is iron, and the magnetic material is magnet, the first connector terminal 32 may be manufactured by using magnet, and the second connector terminal 34 and the connecting piece 33 may be manufactured by using iron. In this way, the first connector terminal 32, the second connector terminal 34, and the connecting piece 33 may be connected together by using a magnetic suction force of magnet on iron, and there is a specific connection force between the first connector terminal 32, the second connector terminal 34, and the connecting piece 33.

It should be noted that, when the first connector terminal 32 and/or the second connector terminal 34 are/is made of the first material (or the second material), it may indicate that a material including the connecting piece 33 that is extendedly disposed is also the first material (or the second material); or a part, other than the connecting piece 33, in the first connector terminal 32 and/or the second connector terminal 34 may be the first material (or the second material).

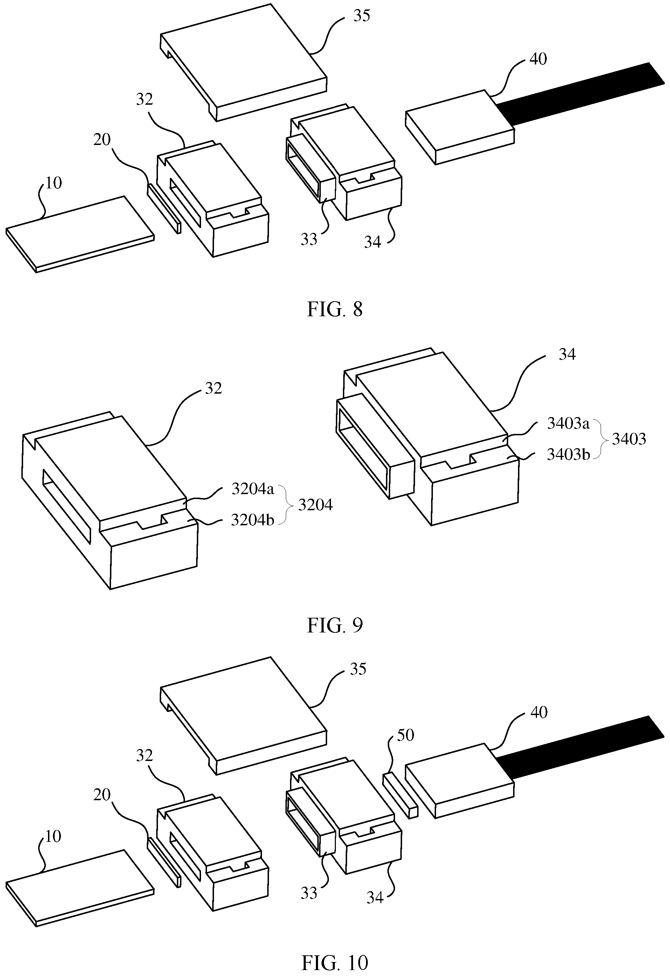

After the detachable connection between the first connector terminal 32 and the second connector terminal 34 is implemented through the connecting piece 33 that is extendedly disposed at one end of the first connector terminal 32 or the second connector terminal 34, to ensure that the first connector terminal 32 and the second connector terminal 34 do not move relative to each other in a use process, as shown in FIG. 8, the connection assembly 30 may further include a cover 35, and the cover 35 is configured to be detachably connected to the first connector terminal 32 and the second connector terminal 34. In other words, after the first connector terminal 32 and the second connector terminal 34 are plugged in, the first connector terminal 32 and the second connector terminal 34 may be locked through the disposed cover 35, to avoid relative movement between the first connector terminal 32 and the second connector terminal 34.

By way of an example but not a limitation, at least two protrusions may be provided on one side that is of the cover 35 and that faces the first connector terminal 32 and the second connector terminal 34, and at least one groove corresponding to the protrusions is provided on one side that is of each of the first connector terminal 32 and the second connector terminal 34 and that faces the cover 35. After the protrusions are inserted into the grooves, the first connector terminal 32 and the second connector terminal 34 can be fastened. Alternatively, at least two grooves are provided on one side that is of the cover 35 and that faces the first connector terminal 32 and the second connector terminal 34, and at least one protrusion corresponding to the grooves on the cover 35 is provided on one side that is of each of the first connector terminal 32 and the second connector terminal 34 and that faces the cover 35. A distance between the first connector terminal 32 and the second connector terminal 34 is fastened in a manner of inserting the protrusions into the grooves. In addition, at least two protrusions and at least two grooves may alternatively be provided on one side that is of the cover 35 and that faces the first connector terminal 32 and the second connector terminal 34, and at least one groove corresponding to the protrusions on the cover 35 and at least one protrusion corresponding to the grooves on the cover 35 are provided on one side that is of each of the first connector terminal 32 and the second connector terminal 34 and that faces the cover 35, to form a mechanical interlocking structure by using a design in which the protrusions and the grooves cooperate with each other, so that the first connector terminal 32 and the second connector terminal 34 are fastened.

It is not difficult to understand that, during actual application, at least one protrusion and at least one groove may alternatively be provided on one side that is of the cover 35 and that faces the first connector terminal 32 and the second connector terminal 34, and at least one groove (or at least one protrusion) is provided on one side that is of the first connector terminal 32 and that faces the cover 35, or at least one protrusion (or at least one groove) is provided on one side that is of the second connector terminal 34 and that faces the cover 35, to form a mechanical interlocking structure, so that stability of the connection between the first connector terminal 32 and the second connector terminal 34 is ensured. In addition, the protrusion provided on the cover 35, the first connector terminal 32, or the second connector terminal 34 may guide the cover 35 to cover along a height direction of the protrusions, so that the protrusion is aligned with the groove.

To reduce an overall disposition height of the optical connector, in a possible design, a first avoidance step 3204 is provided on the first connector terminal 32, a first clamping portion is disposed on the first avoidance step 3204, a second avoidance step 3403 is provided on the second connector terminal 34, and a second clamping portion is disposed on the second avoidance step 3403. A third clamping portion configured to be clamped to the first clamping portion and a fourth clamping portion configured to be clamped to the second clamping portion are disposed on the cover 35. The first clamping portion is clamped to the third clamping portion, and the second clamping portion is clamped to the fourth clamping portion.

In this embodiment of this application, as shown in FIG. 9, the first avoidance step 3204 includes a first avoidance side surface 3204a and a first avoidance bottom surface 3204b that are connected to each other, the first avoidance side surface 3204a is connected to a top surface of the first connector terminal 32, the first avoidance bottom surface 3204b is connected to a side surface of the first connector terminal 32, and the first clamping portion is disposed on the first avoidance bottom surface 3204b; or the second avoidance step 3403 includes a second avoidance side surface 3403a and a second avoidance bottom surface 3403b that are connected to each other, the second avoidance side surface 3403a is connected to a top surface of the second connector terminal 34, the second avoidance bottom surface 3403b is connected to a side surface of the second connector terminal 34, and the second clamping portion is disposed on the second avoidance bottom surface 3403b.

In addition, the first clamping portion may be disposed on the first avoidance bottom surface 3204b, and the second clamping portion may be disposed on the second avoidance bottom surface 3403b. In this design, not only manners in which the first connector terminal 32 is fastened to the second connector terminal 34 through the cover 35 can be enriched, but also an overall disposition height of the optical connector can be reduced, thereby further reducing a volume of the optical connector. In addition, the foregoing disposition may further make the assembled optical connector flatter, thereby improving aesthetics of the optical connector.

In the foregoing manner, the first clamping portion may be a groove or a protrusion, and the third clamping portion clamped to the first clamping portion may be a corresponding protrusion or a corresponding groove; the second clamping portion may be a groove or a protrusion, and the fourth clamping portion clamped to the second clamping portion may be a corresponding protrusion or a corresponding groove; and the protrusion and the groove are detachably connected.

In addition to the foregoing manner, a structure similar to a structure in which an outer cover and a meal box body are closed in a meal-box structure may be correspondingly disposed on the cover 35, the first connector terminal 32, and the second connector terminal 34, so that the first connector terminal 32 is fastened to the second connector terminal 34 through the cover 35.

Based on the foregoing disposition, to further increase a retention force between the first connector terminal 32 and the second connector terminal 34, optionally, at least N of the cover 35, the first connector terminal 32, the connecting piece 33, and the second connector terminal 34 are made of a first material, 0≤N≤3, the rest is made of a second material, and the first material and the second material can be magnetically connected.

It should be understood that the first material may be a ferromagnetic material, and the second material is a magnetic material; or the first material may be a magnetic material, and the second material is a ferromagnetic material.

In other words, at least one of the cover 35, the first connector terminal 32, the connecting piece 33, and the second connector terminal 34 may be made of a magnetic material, and the remaining three may be made of a ferromagnetic material; or at least two of the cover 35, the first connector terminal 32, the connecting piece 33, and the second connector terminal 34 may be made of a magnetic material, and the remaining two may be made of as a ferromagnetic material; or at least three of the cover 35, the first connector terminal 32, the connecting piece 33, and the second connector terminal 34 may be made of a magnetic material, and the remaining one may be made of a ferromagnetic material. In addition to the foregoing disposition manners, all the cover 35, the first connector terminal 32, the connecting piece 33, and the second connector terminal 34 may alternatively be made of a magnetic material. In such a disposition manner, a magnetic piece interlocking structure may be formed, and the first connector terminal 32 and the second connector terminal 34 are locked by fully using a property of the magnetic material, so that the first connector terminal 32 and the second connector terminal 34 are more tightly connected, thereby improving assembly efficiency and use reliability of the optical connector.

It should be noted that, when the first connector terminal 32 and/or the second connector terminal 34 are/is made of the first material (or the second material), it may indicate that a material including the connecting piece 33 that is extendedly disposed is also the first material (or the second material); or a part, other than the connecting piece 33, in the first connector terminal 32 and/or the second connector terminal 34 may be the first material (or the second material).

In a process of assembling the optical connector, to increase an installation tolerance range, avoid small displacement or angle deviation that affects coupling between the PIC 10 and the FAU 40, and improve transmission efficiency of the optical signal, in a possible implementation, as shown in FIG. 10, the optical connector may further include a second lens array 50 connected to the FAU 40, the second lens array 50 is located between the first lens array 20 and the FAU 40, and the second lens array 50 is configured to perform beam-expanding or convergence on the optical signal.

Optionally, an anti-reflective coating may be disposed between the second lens array 50 and the FAU 40, to reduce reflection of the optical signal in a process of being transmitted to the FAU 40, and improve utilization of the optical signal.

It should be noted that, at a transmit end or a receive end of an actual optical communication system, a process of interconnection and assembly between the PIC 10 and the FAU 40 may include the following steps: First, one end of the PIC 10 extends into the through hole 31 from one end that is of the first connector terminal 32 and that is away from the second connector terminal 34 to be coupled and connected to the first lens array 20; the other end of the PIC 10 is electrically connected to the electrical chip in a manner such as reflow soldering based on the board; then, the FAU 40 extends into the through hole 31 from one end that is of the second connector terminal 34 and that is away from the first connector terminal 32, so that the optical axis of the FAU 40 is coaxially disposed with the optical axis of the first lens array 20; and finally, the detachable connection between the second connector terminal 34 on which the FAU 40 is disposed and the first connector terminal 32 on which the PIC 10 is connected is implemented through the connecting piece 33, to complete transmission of the optical signal between the PIC 10 and the FAU 40. Such a design not only complies with the conventional interconnection and assembly process of coupling between the PIC 10 and the FAU 40, and avoids damage to the FAU 40 caused by a high temperature during reflow soldering, but also a pluggable structure design of the first connector terminal 32 at the PIC 10 end and the second connector terminal 34 at the FAU 40 end can improve assembly efficiency of the PIC 10 and the FAU 40, and improve maintainability of the FAU 40 in the use process.

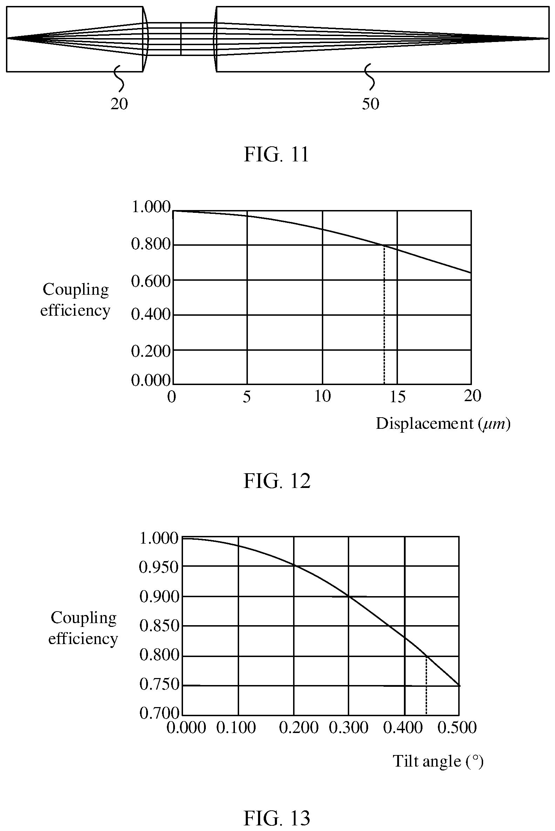

The second lens array 50 is disposed between the first lens array 20 and the FAU 40, so that a diagram of a structure of an optical path shown in FIG. 11 may be formed. A collimated optical signal is output after the optical signal sent by the PIC 10 is refracted by the first lens array 20, and a converged optical signal is output after the collimated optical signal is refracted by the second lens array 50. Based on the connection between the second lens array 50 and the FAU 40, the converged optical signal is transmitted to the FAU 40.

Based on the diagram of the structure of the optical path shown in FIG. 11, in this embodiment of this application, a value of an MFD of a spot on an end surface that is of the PIC 10 and that is close to the first lens array 20 is set to 4 µm (micrometer), a value of an MFD of a spot on an end surface that is of the FAU 40 and that is close to the second lens array 50 is set to 9.6 µm, and a beam waist diameter of the optical signal collimated by the first lens array 20 is set to 60 µm (Si). When a material of the first lens array 20 is selected as silicon (Si), a curvature radius of the first lens array 20 is set to 0.3 mm (millimeter), and a thickness of the first lens array 20 is set to 0.42 mm. When a material of the second lens array 50 is set to silicon (Si), a curvature radius of the second lens array 50 is set to 0.73 mm. When a thickness of the second lens array 50 is set to 1 mm, a diagram of a relationship between displacement and coupling efficiency shown in FIG. 12 and a diagram of a relationship between a tilt angle and coupling efficiency shown in FIG. 13 may be obtained through simulation experiments. Refer to FIG. 12. A horizontal coordinate indicates displacement between a structure formed after the PIC 10 and the first lens array 20 are coupled and a structure formed after the FAU 40 and the second lens array 50 are coupled, and a vertical coordinate indicates coupling efficiency between the PIC 10 and the FAU 40. When the coupling efficiency between the PIC 10 and the FAU 40 is 0.8 (about a 1-decibel coupling loss), displacement deviation between the structure formed after the PIC 10 and the first lens array 20 are coupled and the structure formed after the FAU 40 and the second lens array 50 are coupled is approximately 14 µm (refer to a displacement value corresponding to a dashed line in FIG. 12). Based on symmetry, such a structure design may be obtained, so that a tolerance range of the displacement between the structure formed after the PIC 10 and the first lens array 20 are coupled and the structure formed after the FAU 40 and the second lens array 50 are coupled can be approximately ±14 µm.

Correspondingly, refer to FIG. 13. A horizontal coordinate indicates a tilt angle between a structure formed after the PIC 10 and the first lens array 20 are coupled and a structure formed after the FAU 40 and the second lens array 50 are coupled, and a vertical coordinate indicates coupling efficiency between the PIC 10 and the FAU 40. When the coupling efficiency between the PIC 10 and the FAU 40 is 0.8, the tilt angle between the structure formed after the PIC 10 and the first lens array 20 are coupled and the structure formed after the FAU 40 and the second lens array 50 are coupled is approximately 0.43° (refer to a tilt angle value corresponding to a dashed line in FIG. 13). Based on symmetry, the structure design provided in this embodiment of this application may be obtained, so that a tolerance range of the tilt angle between the structure formed after the PIC 10 and the first lens array 20 are coupled and the structure formed after the FAU 40 and the second lens array 50 are coupled is approximately ±0.43°.

According to an actual test, as shown in FIG. 11, when a beam waist diameter of a collimated optical signal between the first lens array 20 and the second lens array 50 is approximately 20 µm to 200 µm, the structure of the optical connector disposed in this embodiment of this application can effectively ensure a low insertion loss of the optical signal between the PIC 10 and the FAU 40, and tolerance ranges of displacement and a tilt angle of the first connector terminal 32 and the second connector terminal 34 in a pluggable process are large, and comply with an actual assembly requirement.

Based on the foregoing experiment simulation, it is not difficult to obtain that the optical connector provided in this embodiment of this application can increase an installation tolerance range (including installation displacement and an installation tilt angle), thereby ensuring a low insertion loss of the optical connector. In addition, in comparison with a case in which both the first lens array 20 and the second lens array 50 are disposed in the first connector terminal 32 or the second connector terminal 34, in this disposition manner, flexibility of disposing the second lens array 50 is increased, and reliable use stability of the optical connector is ensured.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical connector, wherein the optical connector comprises: a first lens array (20), a connection assembly (30), and a fiber array unit FAU (40); and
a through hole (31) is provided in the connection assembly (30), the first lens array (20) is disposed in the through hole (31), one end of the FAU (40) is fastened in the through hole (31), and an optical axis of the FAU (40) is coaxially disposed with an optical axis of the first lens array (20).

2. The optical connector according to claim 1, wherein the connection assembly (30) comprises a first connector terminal (32) and a second connector terminal (34), and one end of the first connector terminal (32) is detachably connected to one end of the second connector terminal (34);
a first through hole (320) is provided in the first connector terminal (32), a second through hole (340) is provided in the second connector terminal (34), and the first through hole (320) and the second through hole (340) communicate to form the through hole (31); and
the first lens array (20) is disposed in the first through hole (320), and the end of the FAU (40) is fastened in the second through hole (340).

3. The optical connector according to claim 2, wherein the first through hole (320) comprises a first hole segment (3201), a second hole segment (3202), and a third hole segment (3203) that sequentially communicate, a size of the first hole segment (3201) and a size of the third hole segment (3203) are both greater than a size of the second hole segment (3202), and the first hole segment (3201) communicates with the second through hole 340; and
the first lens array (20) is disposed in the third hole segment (3203), a size of the first lens array (20) is greater than the size of the second hole segment (3202), and the first lens array (20) abuts against one end of the second hole segment (3202).

4. The optical connector according to claim 3, wherein a connecting piece (33) is extendedly disposed at one end that is of the second connector terminal (34) and that is close to the first connector terminal (32), and the connecting piece (33) is capable of extending into the first hole segment (3201) and is detachably connected to the first connector terminal (32).

5. The optical connector according to claim 3, wherein a connecting piece (33) is extendedly disposed at one end that is of the first connector terminal (32) and that is close to the second connector terminal (34), the second through hole (340) comprises a large hole segment (3401) and a small hole segment (3402), the FAU (40) is fastened in the small hole segment (3402), and the connecting piece (33) is capable of extending into the large hole segment (3401) and is detachably connected to the second connector terminal (34).

6. The optical connector according to any one of claims 2 to 5, wherein the connection assembly (30) further comprises a cover (35), and the cover (35) is detachably connected to the first connector terminal (32) and the second connector terminal (34).

7. The optical connector according to claim 6, wherein a first avoidance step (3204) is provided on the first connector terminal (32), a first clamping portion is disposed on the first avoidance step (3204), a second avoidance step (3403) is provided on the second connector terminal (34), and a second clamping portion is disposed on the second avoidance step (3403);
a third clamping portion configured to be clamped to the first clamping portion and a fourth clamping portion configured to be clamped to the second clamping portion are disposed on the cover (35); and
the first clamping portion is clamped to the third clamping portion, and the second clamping portion is clamped to the fourth clamping portion.

8. The optical connector according to claim 6 or 7, wherein at least N of the cover (35), the first connector terminal (32), the connecting piece (33), and the second connector terminal (34) are made of a first material, 0≤N≤3, the rest is made of a second material, and the first material and the second material are capable of being magnetically connected.

9. The optical connector according to any one of claims 2 to 5, wherein at least N of the first connector terminal (32), the connecting piece (33), and the second connector terminal (34) are made of a first material, 0≤N≤2, the rest is made of a second material, and the first material and the second material are capable of being magnetically connected.

10. The optical connector according to any one of claims 1 to 9, wherein an anti-reflective coating is disposed on one surface that is of the first lens array (20) and that is away from the FAU (40).

11. The optical connector according to any one of claims 1 to 10, wherein a fiber in the FAU (40) comprises any one of an expanded beam fiber, a few-mode fiber, and a multi-mode fiber.

12. The optical connector according to any one of claims 1 to 11, wherein the optical connector further comprises a second lens array (50) connected to the FAU (40), and the second lens array (50) is located between the first lens array (20) and the FAU (40).

13. The optical connector according to claim 12, wherein an anti-reflective coating is disposed between the second lens array (50) and the FAU (40).

14. An optical communication system, wherein the optical communication system comprises at least one optical connector according to any one of claims 1 to 13, a printed circuit board PCB, and a PIC (10) corresponding to the optical connector; and
the PIC (10) protrudes from the PCB, and one end that is of the PIC (10) and that protrudes from the PCB extends into a through hole (31) of the optical connector and is connected to the first lens array (20).
